(19) Europäisches Patentamt / European Patent Office / Office européen des brevets

(11) **EP 2 765 733 A1**

(12) **EUROPEAN PATENT APPLICATION**
published in accordance with Art. 153(4) EPC

(43) Date of publication:
**13.08.2014 Bulletin 2014/33**

(51) Int Cl.:
*H04L 7/00* (2006.01)          *G04G 3/00* (2006.01)
*G04G 3/02* (2006.01)

(21) Application number: **12838617.4**

(22) Date of filing: **27.09.2012**

(86) International application number:
**PCT/JP2012/074832**

(87) International publication number:
**WO 2013/051445 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2011   JP 2011221469**
**20.01.2012   JP 2012009641**

(71) Applicant: **Sony Corporation**
**Tokyo 108-0075 (JP)**

(72) Inventors:
• **SOMEYA Ikuo**
**Tokyo 108-0075 (JP)**
• **HAMAMATSU Toshihiko**
**Tokyo 108-0075 (JP)**
• **KOJIMA Toshiaki**
**Tokyo 108-0075 (JP)**

(74) Representative: **DeVile, Jonathan Mark**
**D Young & Co LLP**
**120 Holborn**
**London EC1N 2DY (GB)**

(54) **FREQUENCY DIFFERENCE DETECTION DEVICE, FREQUENCY DIFFERENCE DETECTION METHOD, AND PROGRAM**

(57)    The present disclosure relates to a frequency difference detection device that can synchronize oscillation frequency with a master device in a network with high precision, and also relates to a frequency difference detection method and a program.

A frequency difference detection device as one aspect of the present disclosure is a frequency difference detection device that detects a difference in oscillation frequency between a master device and a slave device connected to each other via a network. The frequency difference detection device includes: a first subtracting unit that calculates a difference between a transmission time T1 contained in a sync message transmitted periodically from the master device and a reception time T2 at which the message has been received; a second subtracting unit that calculates a difference between a result of a subtraction $T2_i - T1_i$ performed by the first subtracting unit for the sync message received for the ith time, and a result of a subtraction $T2_{i-k} - T1_{i-k}$ performed by the first subtracting unit for the sync message received for the (i - k)th time; and a first dividing unit that divides a result of the subtraction performed by the second subtracting unit by k. The present disclosure can be applied to a PTP slave, for example.

*FIG. 5*

EP 2 765 733 A1

**Description**

TECHNICAL FIELD

The present disclosure relates to frequency difference detection devices, frequency difference detection methods, and programs, and more particularly, relates to a frequency difference detection device, a frequency difference detection method, and a program that are suitably used for synchronizing time information with a master device connected via a network with high precision.

BACKGROUND ART

There have been mechanisms for synchronizing time information between devices connected to each other via a network, and one of the known examples of such mechanisms is IEEE1588 PTP (precision time protocol) (see Patent Document 1, for example).

According to IEEE1588 PTP, PTP messages are exchanged between a master device (hereinafter referred to as the PTP master) and a slave device (hereinafter referred to as the PTP slave) connected to each other via a network, so that time information $T2$ about the PTP salve can be synchronized with time information $T1$ about the PTP master with high precision on the order of submicroseconds. Specifically, an oscillation frequency $f2$ in the PTP slave is synchronized with an oscillation frequency $f1$ in the PTP master, and the time information $T2$ is then synchronized with the time information $T1$.

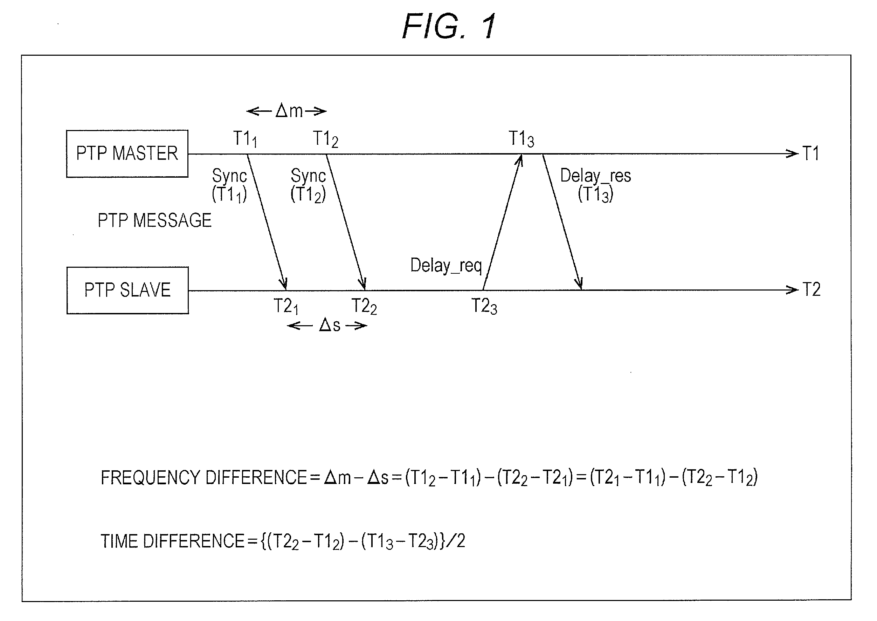

Fig. 1 shows an outline of a conventional high-precision time synchronization process using IEEE1588 PTP.

The PTP master is designed to transmit a Sync message as a PTP message containing a transmission time $T1_i$ over a network at predetermined intervals $\Delta m$ based on an oscillation frequency $f1$. Meanwhile, the PTP slave is designed to receive the Sync message transmitted from the PTP master, extract the transmission time $T1_i$ contained therein, and acquire the reception time $T2_i$ thereof. That is, the PTP slave obtains a transmission time $T1_i$ and a reception time $T2_i$ every time receiving a Sync packet.

The PTP slave is also designed to transmit a Delay_req as a PTP message to the PTP master via a network, and obtain the transmission time $T2_x$ thereof. Having received the Delay_req, the PTP master returns a Delay_res as a PTP message containing the reception time $T1_x$ to the PTP slave. That is, the PTP slave obtains the transmission time $T2_x$ and the reception time $T1_x$ of the Delay_req by transmitting the Delay_req and receiving the Delay_res as a response thereto.

However, it is assumed that the time required to communicate a PTP message such as a Sync message, a Delay_req, or a Delay_res via a network (hereinafter referred to as the network delay time) does not vary but is constant.

In this case, if the oscillation frequency $f1$ of the PTP master is equal to the oscillation frequency $f2$ of the PTP slave, the Sync message transmission intervals $\Delta m = T1_2 - T1_1$ in the PTPmaster are the same as the Syncmessage reception intervals $As = T2_2 - T2_1$ in the PTP slave. In other words, in a case where the difference $\Delta m - \Delta s$ between $\Delta m$ and $\Delta s$ is not 0, there is a difference between the oscillation frequency $f1$ of the PTP master and the oscillation frequency $f2$ of the PTP slave, and synchronization is not established.

Therefore, to establish frequency synchronization, the oscillation frequency $f2$ of the PTP slave should be adjusted so that the difference $\Delta m - \Delta s$ between $\Delta m$ and $\Delta s$ (hereinafter referred to as the frequency difference) will become 0. The frequency difference $\Delta m - \Delta s$ can be expressed by the following equation.

$$\text{Frequency difference } \Delta m - \Delta s = (T1_2 - T1_1) - (T2_2 - T2_1)$$
$$= (T2_1 - T1_1) - (T2_2 - T1_2)$$

To establish time synchronization, the PTP slave transmits a Delay_req after frequency synchronization is established as described above, and receives a Delay_res as a response, to obtain the transmission time $T2_3$ and the reception time $T1_3$ of the Delay_req.

Specifically, from the following two equations each expressing a network delay

Network delay = $(T2_2 - \text{time difference}) - T1_2$ and

Network delay = $T1_3 - (T2_3 - \text{time difference})$,

Time difference = $\{(T2_2 - T1_2) - (T1_3 - T2_3)\}/2$

is calculated. The internal clock $T2$ in the PTP slave should be adjusted so that the time difference will become 0.

CITATION LIST

PATENT DOCUMENT

Patent Document 1: Japanese Patent Application Laid-Open No. 2010-190635

SUMMARY OF THE INVENTION

PROBLEMS TO BE SOLVED BY THE INVENTION

When high-capacity packets such as video signals flow in the network to which the PTP master and the PTP slave are connected, a congestion occurs in the network, and the network delay time for the above described PTP messages might temporarily become longer.

Specifically, as for Sync messages transmitted at transmission times $T1_1$, $T1_2$, and $T1_3$, the network delay time is constant, as shown in Fig. 2. However, a Sync message transmitted at a transmission time $T1_4$ is delayed by a duration D1.

In such a case, the assumption that the network delay time for the above described PTP messages is constant is not satisfied. Therefore, frequency synchronization and time synchronization cannot be accurately established by the above described method.

The present disclosure is made in view of those circumstances, and aims to synchronize oscillation frequency with a master device in a network with high precision.

SOLUTIONS TO PROBLEMS

A frequency difference detection device as one aspect of the present disclosure is a frequency difference detection device that detects a difference in oscillation frequency between a master device and a slave device connected to each other via a network. The frequency difference detection device includes: a first subtracting unit that calculates a difference between a transmission time T1 contained in a sync message transmitted periodically from the master device and a reception time T2 at which the message has been received; a second subtracting unit that calculates a difference between a result of a subtraction $T2_i - T1_i$ performed by the first subtracting unit for the sync message received for the ith time, and a result of a subtraction $T2_{i-k} - T1_{i-k}$ performed by the first subtracting unit for the sync message received for the (i - k)th time; and a first dividing unit that divides a result of the subtraction performed by the second subtracting unit by k.

The frequency difference detection device as the one aspect of the present disclosure may further include: a third subtracting unit that calculates a difference between the result of the subtraction $T2_i - T1_i$ performed by the first subtracting unit for the sync message received for the ith time and a result of a subtraction $T2_{i-k+j} - T1_{i-k+j}$ performed by the first subtracting unit for the sync message received for the (i - k + j) th time (j being an integer smaller than k); a second dividing unit that divides a result of the subtraction performed by the third subtracting unit by k - j; a switch that outputs a result of the division performed by the first dividing unit with k or a result of the division performed by the second dividing unit with k - j ; and a switch control unit that controls the switch.

In the slave device, the oscillation frequency may be adjusted to obtain 0 as the result of the division performed by the first dividing unit with k or the result of the division performed by the second dividing unit with k - j , either of the results being output from the switch.

Under the control of the switch control unit, the switch may output the result of the division performed by the first dividing unit with k, the result of the division performed by the second dividing unit with k - j, or the value 0.

When the absolute value of the result of the subtraction performed by the second subtracting unit is equal to or smaller than a predetermined threshold value, the switch control unit may cause the switch to output the result of the division performed by the first dividing unit with k. When the absolute value of the result of the subtraction performed by the second subtracting unit is greater than the predetermined threshold value, and the absolute value of the result of the subtraction performed by the third subtracting unit is equal to or smaller than the predetermined threshold value, the switch control unit may cause the switch to output the result of the division performed by the second dividing unit with k - j. When the absolute value of the result of the subtraction performed by the second subtracting unit is greater than the predetermined threshold value, and the absolute value of the result of the subtraction performed by the third subtracting unit is greater than the predetermined threshold value, the switch control unit may cause the switch to output the value 0.

The frequency difference detection device as the one aspect of the present disclosure may further include: a fourth subtracting unit that calculates a difference between the result of the subtraction $T2_i - T1_i$ performed by the first subtracting unit for the sync message received for the ith time and a result of a subtraction $T2_{i-1} - T1_{i-1}$ performed by the first subtracting unit for the sync message received for the (i - 1)th time; and a determining unit that detects an increase, a decrease, or no variations in network delay time based on a result of the subtraction performed by the fourth subtracting unit.

When the number of times an increase in the network delay time has been detected is equal to the number of times a decrease in the network delay time has been detected among results of the last k detections performed by the determining unit, the switch control unit may cause the switch to output the result of the division performed by the first dividing unit with k. When the number of times an increase in the network delay time has been detected differs from the number of times a decrease in the network delay time has been detected among the results of the last k detections performed by the determining unit, and the number of times an increase in the network delay time has been detected is equal to the number of times a decrease in the network delay time has been detected among results of the last (k - 1) detections performed by the determining unit, the switch control unit may cause the switch to output the result of the division performed by the second dividing unit with k - j. When the number of times an increase in the network delay time has been detected differs from the number of times a decrease in the network delay time has been detected among the results of the last k detections performed by the determining unit, and the number of times an increase in the network delay time has been detected differs from the number of times a decrease in the network delay time has been detected among the results of the last (k - 1) detections performed by the determining unit, the switch control unit may cause the switch to output the value 0.

A frequency difference detection method as one aspect of the present disclosure is a frequency difference detection method implemented in a frequency difference detection device that detects a difference in oscillation frequency between a master device and a slave device connected to each other via a network. The frequency difference detection method includes: a first subtracting step of calculating a difference between a transmission time T1 contained in a sync message transmitted periodically from the master device and a reception time T2 at which the message has been received; a second subtracting step of calculating a difference between a result of a subtraction $T2_i - T1_i$ performed in the first subtracting step for the sync message received for the ith time, and a result of a subtraction $T2_{i-k} - T1_{i-k}$ performed in the first subtracting step for the sync message received for the (i - k)th time; and a dividing step of dividing a result of the subtraction performed in the second subtracting step by k, the steps being carried out by the frequency difference detection device.

A program as one aspect of the present disclosure is a program to be executed by a computer that detects a difference in oscillation frequency between a master device and a slave device connected to each other via a network. The program causes the computer to function as: a first subtracting unit that calculates a difference between a transmission time T1 contained in a sync message transmitted periodically from the master device and a reception time T2 at which the message has been received; a second subtracting unit that calculates a difference between a result of a subtraction $T2_i - T1_i$ performed by the first subtracting unit for the sync message received for the ith time, and a result of a subtraction $T2_{i-k} - T1_{i-k}$ performed by the first subtracting unit for the sync message received for the (i - k) th time; and a dividing unit that divides a result of the subtraction performed by the second subtracting unit by k.

In one aspect of the present disclosure, a difference between a transmission time T1 contained in a sync message transmitted periodically from a master device and a reception time T2 at which the message has been received is calculated, and a difference between a result of the subtraction $T2_i - T1_i$ for the sync message received for the ith time and a result of the subtraction $T2_{i-k} - T1_{i-k}$ for the sync message received for the (i - k)th time is divided by k.

EFFECTS OF THE INVENTION

According to one aspect of the present disclosure, oscillation frequency can be synchronized with a master device in a network with high precision.

BRIEF DESCRIPTION OF DRAWINGS

Fig. 1 is a diagram showing an outline of a conventional high-precision time synchronization process using IEEE1588 PTP.

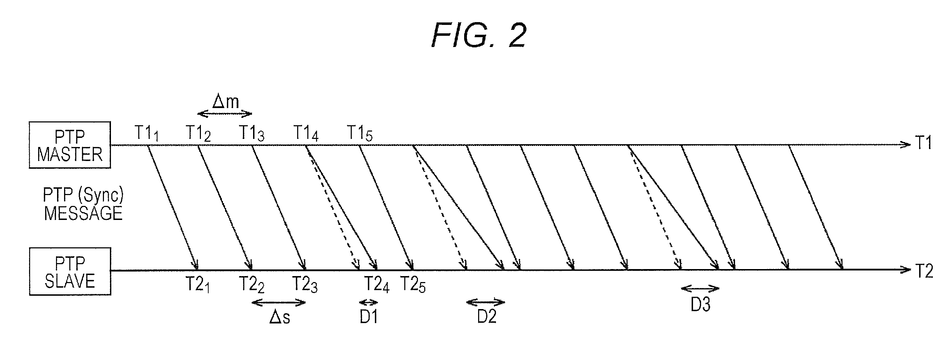

Fig. 2 is a diagram showing an example case where the network delay time temporarily varies.
Fig. 3 is a block diagram showing a first example structure of a frequency difference detection device as an embodiment of the present disclosure.
Fig. 4 is a block diagram showing a second example structure of the frequency difference detection device as an embodiment of the present disclosure.
Fig. 5 is a block diagram showing a third example structure of the frequency difference detection device as an embodiment of the present disclosure.
Fig. 6 is a diagram showing the relationship between the transmission time $T1_{i-k}$ and the reception time $T2_{i-k}$ of the

Sync message received k Sync messages earlier.

Fig. 7 is a flowchart for explaining an operation of the third example structure of the frequency difference detection device.

Fig. 8 is a diagram showing outputs of the third example structure of the frequency difference detection device.

Fig. 9 is a block diagram showing a fourth example structure of the frequency difference detection device as an embodiment of the present disclosure.

Fig. 10 is a flowchart for explaining an operation of the third example structure of the frequency difference detection device.

Fig. 11 is a block diagram showing a third example structure of the frequency difference detection device as an embodiment of the present disclosure.

Fig. 12 is a diagram for explaining an operation of the fourth example structure of the frequency difference detection device.

Fig. 13 is a flowchart for explaining an operation of the fourth example structure of the frequency difference detection device.

Fig. 14 is a block diagram showing an example structure of a computer.

MODE FOR CARRYING OUT THE INVENTION

The following is a detailed description of the best modes for carrying out the present disclosure (hereinafter referred to as embodiments), with reference to the drawings.

A frequency difference detection device that is an embodiment of the present disclosure is included in a PTP slave (a slave device) that exchanges PTP messages with a PTP master (a master device) in a network so as to have time information synchronized with the PTP master.

This frequency difference detection device detects $\Delta m - \Delta s$ as information for synchronizing the oscillation frequency $f2$ of the PTP slave with the oscillation frequency $f1$ of the PTP master without error. In the PTP slave including this frequency difference detection device, frequency synchronization is established by adjusting the oscillation frequency $f2$ so that the detected $\Delta m - \Delta s$ will become 0.

[First Example Structure of the Frequency Difference Detection Device]

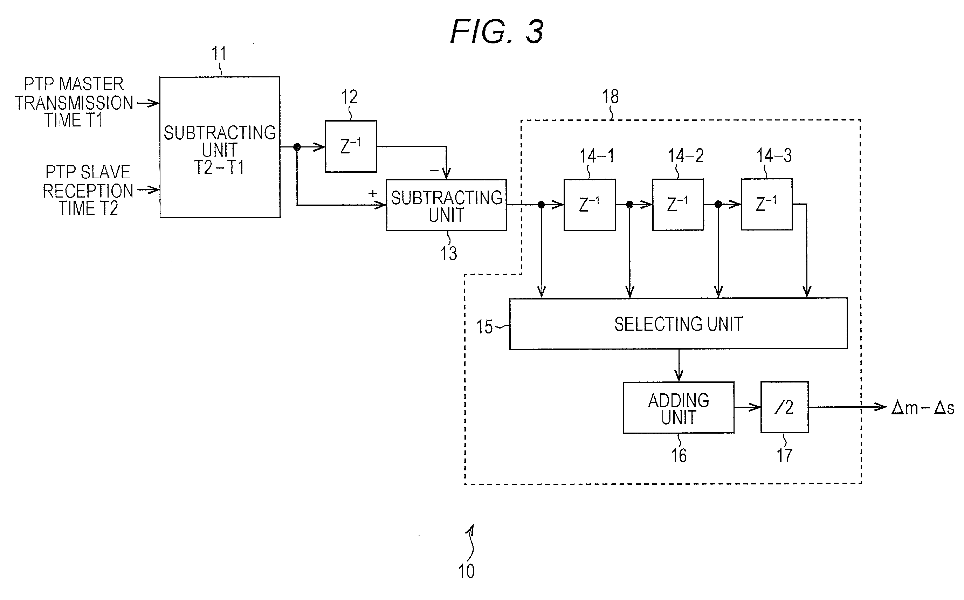

Fig. 3 shows a first example structure of the frequency difference detection device as an embodiment. This frequency difference detection device 10 includes a subtracting unit 11, a 1-sequence delaying unit 12, a subtracting unit 13, and a median filter 18.

Every time the PTP slave including the frequency difference detection device 10 receives a Sync message as a PTP message, the subtracting unit 11 subtracts the transmission time $T1_i$ from the reception time $T2_i$, and outputs the subtraction result $T2_i - T1_i$ to the 1-sequence delaying unit 12 and the subtracting unit 13.

The 1-sequence delaying unit 12 stores the subtraction result $T2_i - T1_i$, which is input from the subtracting unit 11, and outputs the subtraction result $T2_{i-1} - T1_{i-1}$ corresponding to the Sync message that has been received last time and been stored to the subtracting unit 13.

The subtracting unit 13 subtracts the subtraction result $T2_{i-1} - T1_{i-1}$ corresponding to the Sync message received last time from the subtraction result $T2_i - T1_i$ corresponding to the Sync message received this time, and outputs the subtraction result $(T2_i - T1_i) - (T2_{i-1} - T1_{i-1})$ as a frequency difference $\Delta m - \Delta s$, to the median filter 18.

The median filter 18 is formed with 1-sequence delaying units 14-1 through 14-3, a selecting unit 15, an adding unit 16, and a dividing unit 17. The 1-sequence delaying units 14-1 through 14-3 store frequency differences $\Delta m - \Delta s$, which are input from the previous stage, and outputs the frequency differences $\Delta m - \Delta s$ that have been input for the first time and been stored to the later stage. The selecting unit 15 compares four frequency differences $\Delta m - \Delta s$, which are simultaneously input from the subtracting unit 13 and the 1-sequence delaying units 14-1 through 14-3, selects the two out of the four values excluding the largest and smallest values, and outputs the selected values to the adding unit 16. The adding unit 16 adds up the selected two frequency differences $\Delta m - \Delta s$, and outputs the result to the dividing unit 17. The dividing unit 17 divides the result of the addition of the two frequency differences $\Delta m - \Delta s$ by 2.

[Description of Operation]

An operation of the frequency difference detection device 10 is now described.

When the PTP slave including the frequency difference detection device 10 receives a Sync message as a PTP message, the subtracting unit 11 subtracts the transmission time $T1_i$ from the reception time $T2_i$, and outputs the subtraction result $T2_i - T1_i$ to the 1-sequence delaying unit 12 and the subtracting unit 13.

The 1-sequence delaying unit 12 stores the subtraction result $T2_i - T1_i$, which has been input from the subtracting unit 11, and outputs the subtraction result $T2_{i-1} - T1_{i-1}$ corresponding to the Sync message that has been received last time and been stored, to the subtracting unit 13.

The subtracting unit 13 subtracts the subtraction result $T2_{i-1} - T1_{i-1}$ corresponding to the Sync message received last time from the subtraction result $T2_i - T1_i$ corresponding to the Sync message received this time, and outputs the subtraction result $(T2_i - T1_i) - (T2_{i-1} - T1_{i-1})$ as a frequency difference $\Delta m - \Delta s$, to the median filter 18.

The median filter 18 compares a total of four frequency differences including the frequency difference $\Delta m - \Delta s$, which has been input from the subtracting unit 13, and the frequency differences $\Delta m - \Delta s$, which have been input one Sync message earlier, two Sync messages earlier, and three Sync messages earlier, and outputs the average value between the two values out of those four values excluding the largest and smallest values.

In the PTP slave, the oscillation frequency f2 is adj usted so that the averaged frequency difference $\Delta m - \Delta s$ will be 0.

As described above, the frequency difference detection device 10 outputs the average value between the two values out of the four successive frequency differences $\Delta m - \Delta s$ excluding the largest and smallest values as the ultimate frequency difference $\Delta m - \Delta s$. Accordingly, it is possible to cope with variations in network delay time that occur in a pulse-like manner.

When variations in network delay time successively occur in the frequency difference detection device 10, however, the ultimate frequency difference $\Delta m - \Delta s$ is also affected by the variations in network delay time, and as a result, high-precision frequency synchronization cannot be established.

In view of this, an example structure of a frequency difference detection device designed not to output a frequency difference $\Delta m - \Delta s$ affected by variations in network delay time is described next.

[Second Example Structure of the Frequency Difference Detection Device]

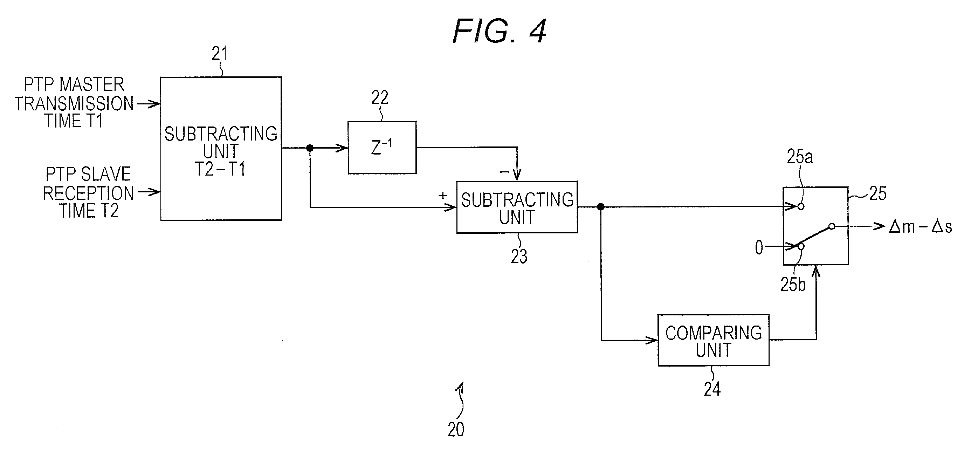

Fig. 4 shows a second example structure of the frequency difference detection device as an embodiment. This frequency difference detection device 20 includes a subtracting unit 21, a 1-sequence delaying unit 22, a subtracting unit 23, a comparing unit 24, and a switch 25.

Every time the PTP slave including the frequency difference detection device 20 receives a Sync message as a PTPmessage, the subtractingunit 21 subtracts the transmission time $T1_i$ from the reception time $T2_i$, and outputs the subtraction result $T2_i - T1_i$ to the 1-sequence delaying unit 22 and the subtracting unit 23.

The 1-sequence delaying unit 22 stores the subtraction result $T2_i - T1_i$, which is input from the subtracting unit 21, and outputs the subtraction result $T2_{i-1} - T1_{i-1}$ corresponding to the Sync message that has been received last time and been stored, to the subtracting unit 23.

The subtracting unit 23 subtracts the subtraction result $T2_{i-1} - T1_{i-1}$ corresponding to the Sync message received last time from the subtraction result $T2_i - T1_i$ corresponding to the Sync message received this time, and outputs the subtraction result $(T2_i - T1_i) - (T2_{i-1} - T1_{i-1})$ as a frequency difference $\Delta m - \Delta s$, to the comparing unit 24 and an input terminal 25a of the switch 25.

The comparing unit 24 compares the absolute value $| \Delta m - \Delta s |$ of the frequency difference that is input from the subtracting unit 23 with a predetermined threshold value, and controls the switching of the switch 25 in accordance with the comparison result.

The switch 25 performs switching under the control of the comparing unit 24, and outputs the frequency difference $\Delta m - \Delta s$, which is input to the input terminal 25a, or the value 0, which is input to an input terminal 25b to the later stage.

[Description of Operation]

An operation of the frequency difference detection device 20 is now described.

When the PTP slave including the frequency difference detection device 20 receives a Sync message as a PTP message, the subtracting unit 21 subtracts the transmission time $T1_i$ from the reception time $T2_i$, and outputs the subtraction result $T2_i - T1_i$ to the 1-sequence delaying unit 22 and the subtracting unit 23.

The 1-sequence delaying unit 22 stores the subtraction result $T2_i - T1_i$, which has been input from the subtracting unit 21, and outputs the subtraction result $T2_{i-1} - T1_{i-1}$ corresponding to the Sync message that has been received last time and been stored, to the subtracting unit 23.

The subtracting unit 23 subtracts the subtraction result $T2_{i-1} - T1_{i-1}$ corresponding to the Sync message received last time from the subtraction result $T2_i - T1_i$ corresponding to the Sync message received this time, and outputs the subtraction result $(T2_i - T1_i) - (T2_{i-1} - T1_{i-1})$ as a frequency difference $\Delta m - \Delta s$, to the comparing unit 24 and the input terminal 25a of the switch 25.

The comparing unit 24 determines whether the absolute value $| \Delta m - \Delta s |$ of the frequency difference that is input from the subtracting unit 23 is larger than the predetermined threshold value. If the determination result is positive, the switch 25 switches to the input terminal b. As a result, the switch 25 outputs the value 0 to the later stage. If the determination result is negative, on the other hand, the switch 25 switches to the input terminal a. As a result, the switch 25 outputs the frequency difference $| \Delta m - \Delta s$ that has been input from the subtracting unit 23 to the later stage.

As described above, in the frequency difference detection device 20, when the absolute value $| \Delta m - \Delta s |$ of the frequency difference that has been input from the subtracting unit 23 is larger than the predetermined threshold value, or when the frequency difference $\Delta m - \Delta s$ is greatly affected by variations in network delay time, the value 0 is output, instead of the frequency difference $\Delta m - \Delta s$. Accordingly, the oscillation frequency f2 of the PTP slave can be prevented frombeing adjusted while there are variations in network delay time.

While the value 0 is output instead of the frequency difference $\Delta m - \Delta s$, the oscillation frequency f2 is not adjusted. Therefore, if this situation occurs in an initial stage of frequency synchronization, the time required for synchronizing the oscillation frequency f2 with the oscillation frequency f1 of the PTP master might become long.

In view of this, an example structure of a frequency difference detection device capable of keeping the frequency difference $\Delta m - \Delta s$ from the influence of variations in network delay time is described next.

[Third Example Structure of the Frequency Difference Detection Device]

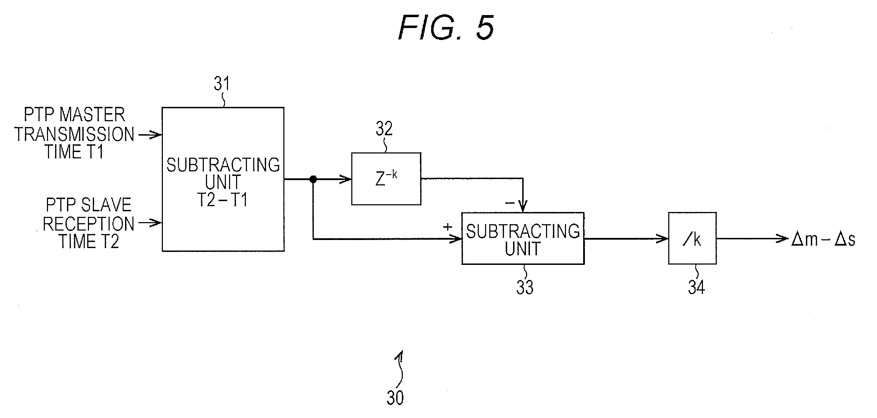

Fig. 5 shows a third example structure of the frequency difference detection device as an embodiment. This frequency difference detection device 30 includes a subtracting unit 31, a k-sequence delaying unit 32, a subtracting unit 33, and a dividing unit 34.

Every time the PTP slave including the frequency difference detection device 30 receives a Sync message as a PTPmessage, the subtractingunit 31 subtracts the transmission time $T1_i$ from the reception time $T2_i$, and outputs the difference $T2_i - T1_i$ to the k-sequence delaying unit 32 and the subtracting unit 33.

The k-sequence delaying unit 32 stores the difference $T2_i - T1_i$, which is input from the subtracting unit 31, and outputs the difference $T2_{i-k} - T1_{i-k}$ corresponding to the Sync message that has been received k Sync messages earlier and been stored, to the subtracting unit 33. Here, k is an integer of 2 or greater, and is preferably a multiple of 2, with the circuit design of the k-sequence delaying unit 32 being taken into consideration. For example, k is 8, 16, or the like.

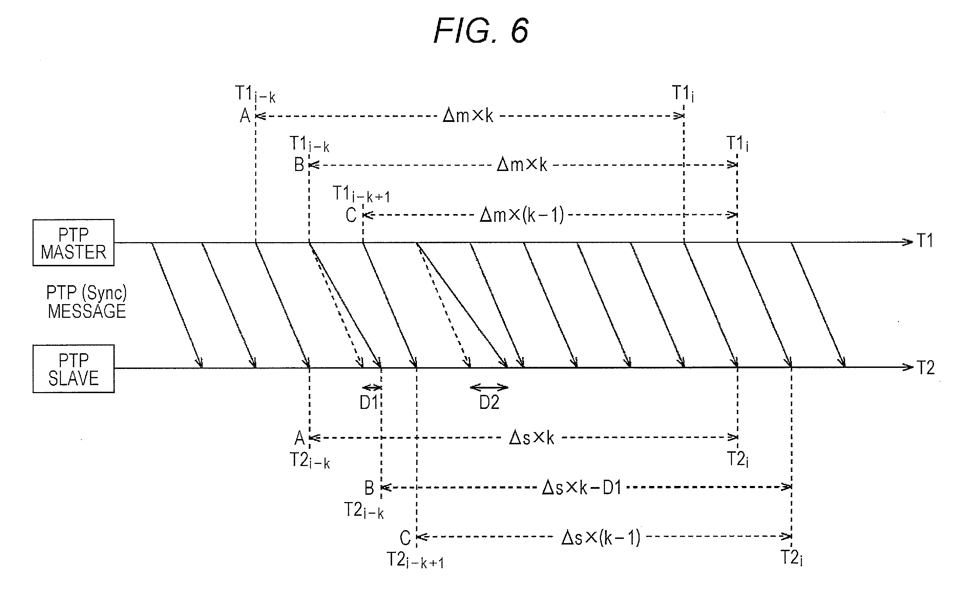

Fig. 6 shows the relationships between the transmission time $T1_i$ and the reception time $T2_i$ of the Sync message received this time, and the transmission time $T1_{i-k}$ and the reception time $T2_{i-k}$ of the Sync message received k Sync messages earlier, in a case where k = 8. When attention is paid to the communication period for k Sync messages indicated by A in the drawing, variations in network delay time have occurred within the communication period. However, as attention is paid only to the relationships between the transmission time $T1_i$ and the reception time $T2_i$ of the current Sync message, and the transmission time $T1_{i-k}$ and the reception time $T2_{i-k}$ of the Sync message that has been received k Sync messages earlier than the current Sync message, there is no influence of variations in network delay time that have occurred within the communication period.

The subtracting unit 33 subtracts the difference $T2_{i-k} - T1_{i-k}$ corresponding to the Sync message received k Sync messages earlier from the difference $T2_i - T1_i$ corresponding to the Sync message received this time, and outputs the difference $(T2_i - T1_i) - (T2_{i-k} - T1_{i-k}) = \Delta m \times k - \Delta s \times k$ to the dividing unit 34.

The dividing unit 34 divides the difference $\Delta m \times k - \Delta s \times k$, which is input from the subtracting unit 33, by k, and outputs the frequency difference $\Delta m - \Delta s$ obtained as a result to the later stage.

[Description of Operation]

An operation of the frequency difference detection device 30 is now described.

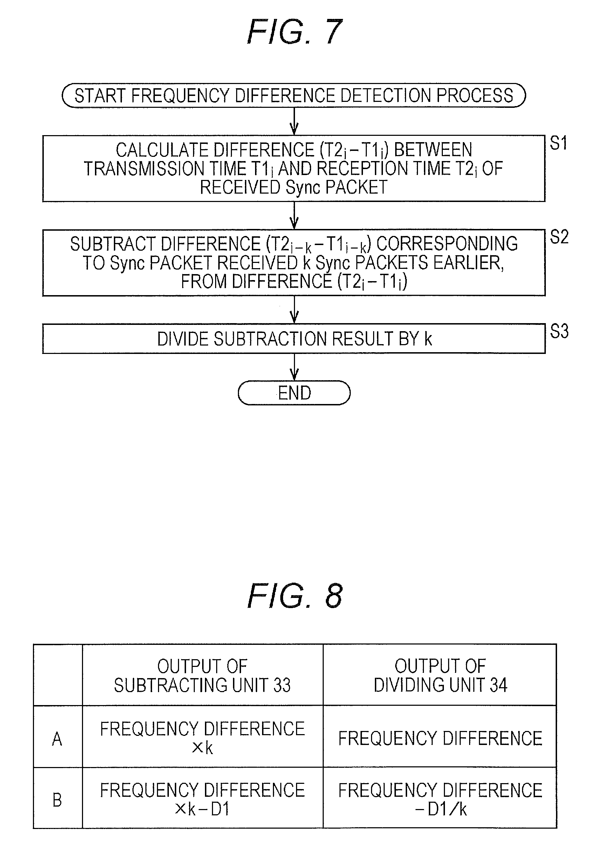

Fig. 7 is a flowchart for explaining a frequency difference detection process to be performed by the frequency difference detection device 30.

When the PTP slave including the frequency difference detection device 30 receives a Sync message as a PTP message, the subtracting unit 31 in step S1 subtracts the transmission time $T1_i$ from the reception time $T2_i$, and outputs the difference $T2_i - T1_i$ as the subtraction result to the k-sequence delaying unit 32 and the subtracting unit 33.

In step S2, the k-sequence delaying unit 32 stores the difference $T2_i - T1_i$, which has been input from the subtracting unit 31, and outputs the difference $T2_{i-k} - T1_{i-k}$ corresponding to the Sync message that has been received k Sync messages earlier and been stored, to the subtracting unit 33.

The subtracting unit 33 subtracts the difference $T2_{i-k} - T1_{i-k}$ corresponding to the Sync message received k Sync messages earlier from the difference $T2_i - T1_i$ corresponding to the Sync message received this time, and outputs the subtraction result $(T2_i - T1_i) - (T2_{i-k} - T1_{i-k}) = \Delta m \times k - \Delta s \times k$ to the dividing unit 34.

In step S3, the dividing unit 34 divides the difference $\Delta m \times k - \Delta s \times k$, which has been input from the subtracting unit 33 by k, and outputs the frequency difference $\Delta m - \Delta s$ obtained as the division result to the later stage.

In the PTP slave, the oscillation frequency f2 is adjusted so that the frequency difference $\Delta m - \Delta s$ obtained as the division result will be 0.

As described above, even when variations in network delay time have occurred within the communication period for k Sync messages as shown in Fig. 6A, the frequency difference detection device 30 can detect a frequency difference $\Delta m - \Delta s$ without the influence of the variations. Accordingly, in the PTP slave including the frequency difference detection device 30, frequency synchronization can be established with high precision.

However, in a case where a variation in network delay time has occurred at an edge of the communication period for k Sync messages (at the start (k Sync messages earlier) in the case of Fig. 6A) as shown in Fig. 6B, the difference to be output from the subtracting unit 33 is $\Delta m \times k - \Delta s \times k$-D1 as shown in Fig. 8. Therefore, the output of the dividing unit 34 is $\Delta m - \Delta s$ - D1/k, and adjustment of the oscillation frequency f2 involves an error equivalent to -D1/k. If the value of k is large, however, the value of -D1/k is small, and the influence thereof may be ignored.

In view of this, an example structure of a frequency difference detection device capable of keeping the frequency difference $\Delta m - \Delta s$ from the influence of a variation in network delay time that has occurred at an edge of the communication period for k Sync messages is described next.

[Fourth Example Structure of the Frequency Difference Detection Device]

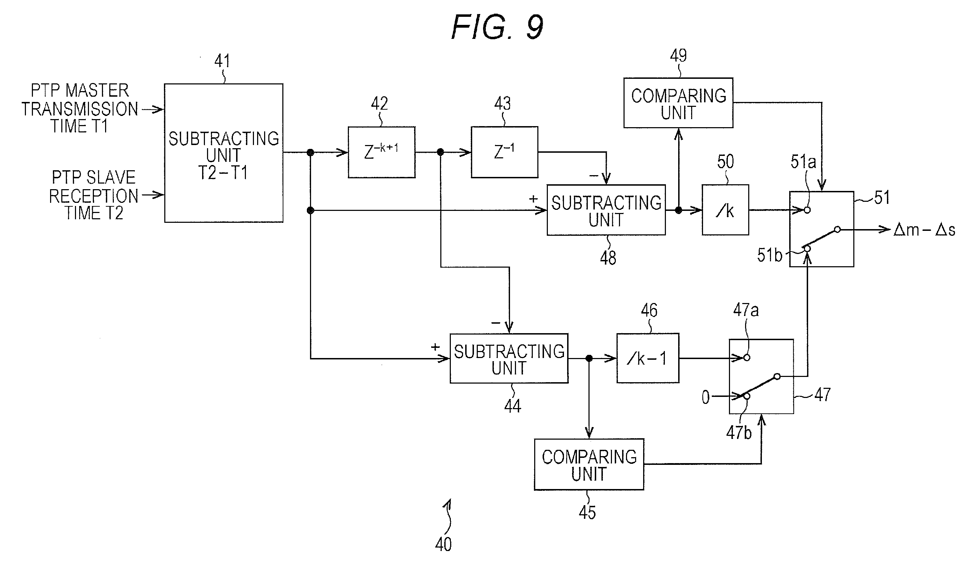

Fig. 9 shows a fourth example structure of the frequency difference detection device as an embodiment. This frequency difference detection device 40 includes a subtracting unit 41, a (k - 1) -sequence delaying unit 42, a 1-sequence delaying unit 43, a subtracting unit 44, a comparing unit 45, a dividing unit 46, a switch 47, a subtracting unit 48, a comparing unit 49, a dividing unit 50, and a switch 51.

Every time the PTP slave including the frequency difference detection device 40 receives a Sync message as a PTPmessage, the subtracting unit 41 subtracts the transmission time $T1_i$ from the reception time $T2_i$, and outputs the difference $T2_i - T1_i$ to the (k - 1)-sequence delaying unit 42, the subtracting unit 44, and the subtracting unit 48.

The (k - 1)-sequence delaying unit 42 stores the difference $T2_i - T1_i$, which is input from the subtracting unit 41, and outputs the difference $T2_{i-k+1} - T1_{i-k+1}$ corresponding to the Sync message that has been received (k - 1) Sync messages earlier and been stored, to the 1-sequence delaying unit 43 and the subtracting unit 44. Here, k is an integer of 2 or greater. For example, k is 8, 16, or the like.

The 1-sequence delaying unit 43 stores the difference $T2_{i-k+1} - T1_{i-k+1}$, which is input from the (k - 1) -sequence delaying unit 42, and outputs the difference $T2_{i-k} - T1_{i-k}$ corresponding to the Sync message that has been received k Sync messages earlier and been stored, to the subtracting unit 48.

The subtracting unit 44 subtracts the difference $T2_{i-k+1} - T1_{i-k+1}$ corresponding to the Sync message received (k - 1) Sync messages earlier from the difference $T2_i - T1_i$ corresponding to the Sync message received this time, and outputs the difference $(T2_i - T1_i) - (T2_{i-k+1} - T1_{i-k+1}) = \Delta m \times (k - 1) - \Delta s \times (k - 1)$ to the comparing unit 45 and the dividing unit 46.

The comparing unit 45 compares the absolute value $| (\Delta m - \Delta s) \times (k - 1) |$ of the difference that is input from the subtracting unit 44 with a predetermined threshold value, and controls the switching of the switch 47 in accordance with the comparison result.

The dividing unit 46 divides the difference $(\Delta m - \Delta s) \times (k - 1)$, which is input from the subtracting unit 44, by (k - 1), and outputs the frequency difference $\Delta m - \Delta s$ obtained as a result to an input terminal 47a of the switch 47.

The switch 47 performs switching under the control of the comparing unit 45, and outputs the frequency difference $\Delta m - \Delta s$, which is input from the dividing unit 46 to the input terminal 47a, or the value 0, which is input to an input terminal 47b to an input terminal 51b of the switch 51.

The subtracting unit 48 subtracts the difference $T2_{i-k} - T1_{i-k}$ corresponding to the Sync message received k Sync messages earlier from the difference $T2_i - T1_i$ corresponding to the Sync message received this time, and outputs the difference $(T2_i - T1_i) - (T2_{i-k} - T1_{i-k}) = \Delta m \times k - \Delta s \times k$ to the comparing unit 49 and the dividing unit 50.

The comparing unit 49 compares the absolute value $| (\Delta m - \Delta s) \times k |$ of the difference that is input from the subtracting unit 48 with a predetermined threshold value, and controls the switching of the switch 51 in accordance with the comparison result.

The dividing unit 50 divides the difference $(\Delta m - \Delta s) \times k$, which is input from the subtracting unit 48, by k, and outputs the frequency difference $\Delta m - \Delta s$ obtained as a result to an input terminal 51a of the switch 51.

The switch 51 performs switching under the control of the comparing unit 49, and outputs the frequency difference $\Delta m - \Delta s$, which is input from the dividing unit 50 to the input terminal 51a, or the output of the switch 47 that is input to the input terminal 51b (the frequency difference $\Delta m - \Delta s$, which is output from the dividing unit 46, or the value 0) to the later stage.

[Description of Operation]

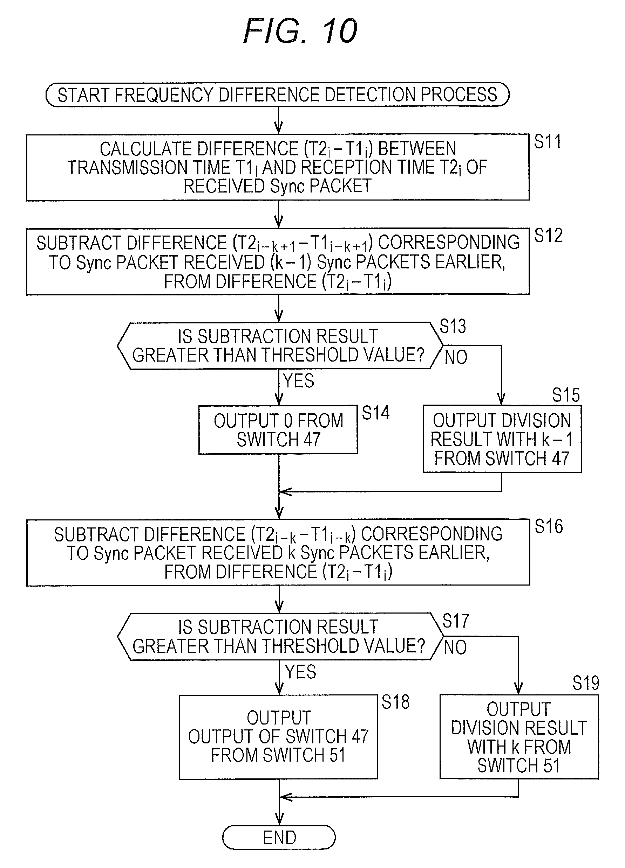

An operation of the frequency difference detection device 40 is now described. Fig. 10 is a flowchart for explaining a frequency difference detection process to be performed by the frequency difference detection device 40.

When the PTP slave including the frequency difference detection device 40 receives a Sync message as a PTP message, the subtracting unit 41 in step S11 subtracts the transmission time $T1_i$ from the reception time $T2_i$, and outputs the difference $T2_i - T1_i$ to the (k - 1)-sequence delaying unit 42, the subtracting unit 44, and the subtracting unit 48.

In step S12, the subtracting unit 44 subtracts the difference $T2_{i-k+1} - T1_{i-k+1}$, which has been input from the (k - 1)-sequence delaying unit 42 and corresponds to the Sync message received (k - 1) Sync messages earlier, from the difference $T2_i - T1_i$ corresponding to the Sync message received this time, and outputs the difference $(T2_i - T1_i) - (T2_{i-k+1} - T1_{i-k+1}) = \Delta m \times (k - 1) - \Delta s \times (k - 1)$ to the comparing unit 45 and the dividing unit 46.

In step S13, the dividing unit 46 divides the difference $(\Delta m - \Delta s) \times (k - 1)$, which has been input from the subtracting unit 44, by (k - 1), and outputs the frequency difference $\Delta m - \Delta s$ obtained as a result to the input terminal 47a of the switch 47. Meanwhile, the comparing unit 45 determines whether the absolute value $| (\Delta m - \Delta s) \times (k-1) |$ of the difference that is input from the subtracting unit 44 is greater than a predetermined threshold value. If the determination result is positive, the process moves on to step S14, and the switch 47 switches to the input terminal 47b under the control of the comparing unit 45, and outputs the value 0 to the input terminal 51b of the switch 51. If the determination result in step S13 is negative, on the other hand, the process moves on to step S15, and the switch 47 switches to the input terminal 47a under the control of the comparing unit 45, and outputs the frequency difference $\Delta m - \Delta s$, which is input from the dividing unit 46, to the input terminal 51b of the switch 51.

In step S16, the subtracting unit 48 subtracts the difference $T2_{i-k} - T1_{i-k}$, which has been input from the 1-sequence delaying unit 43 and corresponds to the Sync message received k Sync messages earlier, from the difference $T2_i - T1_i$ corresponding to the Sync message received this time, and outputs the difference $(T2_i - T1_i) - (T2_{i-k} - T1_{i-k}) = \Delta m \times k - \Delta s \times k$ to the comparing unit 49 and the dividing unit 50.

In step S17, the dividing unit 50 divides the difference $(\Delta m - \Delta s) \times k$, which has been input from the subtracting unit 48, by k, and outputs the frequency difference $\Delta m - \Delta s$ obtained as a result to the input terminal 51a of the switch 51. Meanwhile, the comparing unit 49 determines whether the absolute value $| (\Delta m - \Delta s) \times k |$ of the difference that is input from the subtracting unit 48 is greater than a predetermined threshold value. If the determination result is positive, the process moves on to step S18, and the switch 51 switches to the input terminal 51b under the control of the comparing unit 49, and outputs the output of the switch 47 to the later stage. If the determination result in step S17 is negative, on the other hand, the process moves on to step S19, and the switch 51 switches to the input terminal 51a under the control of the comparing unit 49, and outputs the frequency difference $\Delta m - \Delta s$, which is input from the dividing unit 50, to the later stage.

In the PTP slave, the oscillation frequency f2 is adjusted so that the frequency difference $\Delta m - \Delta s$ obtained as the division result will be 0.

As described above, in a case where variations in network delay time have occurred within the communication period for k Sync messages as shown in Fig. 6B, for example, the frequency difference detection device 40 detects a frequency difference based on the (k-1) Sync messages communication period that is shorter than the above communication period by the time equivalent to one Sync message and does not have variations in network delay time as shown in Fig. 6C. In the PTP slave including the frequency difference detection device 40, frequency synchronization can be established with high precision.

The frequency difference detection device 40 outputs one of the frequency differences with respect to the k Sync messages communication period and the (k - 1) Sync messages communication period. However, frequency differences with respect to communication periods further including stepwise a (k - 2) Sync messages communication period and a (k - 3) Sync messages communication period may be detected, for example, and a frequency difference not affected by variations in network delay time may be selected from those frequency differences and be output.

Meanwhile, the predetermined threshold value to be compared with the input from the subtracting unit 48 at the comparing unit 49 of the frequency detection device 40 is determined in the manner described below, for example.

The frequencyvariable range of a VCO (voltage controlled oscillator) mounted on each of the PTP master and the PTP slave is $\pm 300$ ppm, each Sync message transmission interval is 1/64 second, and the largest possible difference between the frequency f2 of the PTP slave and the frequency f1 of the PTP master is 100 ppm. In this case, due to the largest frequency difference 100 ppm, an error of 1.5 $\mu$s (= 100 ppm/64) might occur in the reception time in a communication of one Sync message. Therefore, amaximumtime error of 1.5k $\mu$s is included in the network delay time in a sequence of k Sync messages.

In view of this, where the predetermined threshold value at the comparing unit 49 is 1.5k $\mu$s, a check can be made to determine whether there is a variation in network delay time, with a time error due to a frequency difference being taken into consideration. For example, where k = 8, the predetermined threshold value at the comparing unit 49 is 12 $\mu$s.

However, when a variation in network delay time actually occurs instead of a time error due to a frequency difference, the variation is not detected if the input from the subtracting unit 48 is slightly smaller than the predetermined threshold value. As a result, processing is performed on the assumption that no variations in network delay time have occurred, and the frequency f2 is not appropriately adjusted.

Therefore, there is a need for a mechanism for more accurately detecting variations that actually occur in network delay time, instead of time errors due to frequency differences.

In view of this, an example structure of a frequency difference detection device capable of more accurately reflecting variations that actually occur in network delay time through detection of frequency differences is described next.

[Fifth Example Structure of the Frequency Difference Detection Device]

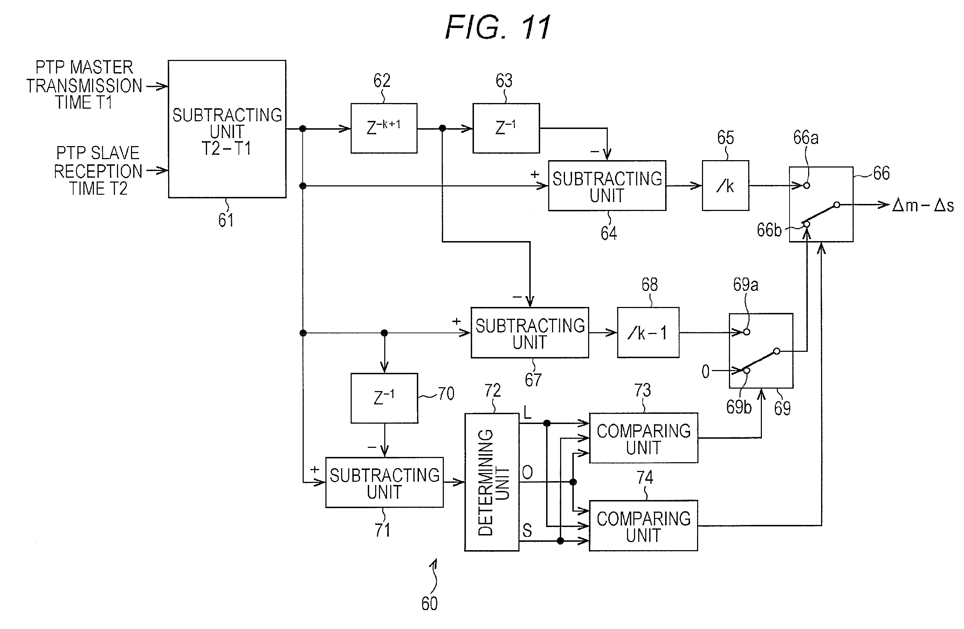

Fig. 11 shows a fifth example structure of the frequency difference detection device as an embodiment. This frequency difference detection device 60 includes a subtracting unit 61, a (k - 1)-sequence delaying unit 62, a 1-sequence delaying unit 63, a subtracting unit 64, a dividing unit 65, a switch 66, a subtracting unit 67, a dividing unit 68, a switch 69, a 1-sequence delaying unit 70, a subtracting unit 71, a determining unit 72, and comparing units 73 and 74.

Every time the PTP slave including the frequency difference detection device 60 receives a Sync message as a PTP message, the subtracting unit 61 subtracts the transmission time $T1_i$ from the reception time $T2_i$, and outputs the difference $T2_i - T1_i$ to the (k - 1)-sequence delaying unit 62, the subtracting unit 64, the subtracting unit 67, the 1-sequence delaying unit 70, and the subtracting unit 71.

The (k - 1)-sequence delaying unit 62 stores the difference $T2_i - T1_i$, which is input from the subtracting unit 61, and outputs the difference $T2_{i-k+i} - T1_{i-k+1}$ corresponding to the Sync message that has been received (k - 1) Sync messages earlier and been stored, to the 1-sequence delaying unit 63 and the subtracting unit 67. Here, k is an integer of 2 or greater. For example, k is 8, 16, or the like.

The 1-sequence delaying unit 63 stores the difference $T2_{i-k+1} - T1_{i-k+1}$, which is input from the (k-1)-sequence delaying unit 42, and outputs the difference $T2_{i-k} - T1_{i-k}$ corresponding to the Sync message that has been received k Sync messages earlier and been stored, to the subtracting unit 64.

The subtracting unit 64 subtracts the difference $T2_{i-k} - T1_{i-k}$ corresponding to the Sync message received k Sync messages earlier from the difference $T2_i - T1_i$ corresponding to the Sync message received this time, and outputs the difference $(T2_i - T1_i) - (T2_{i-k} - T1_{i-k}) = \Delta m \times k - \Delta s \times k = (\Delta m - \Delta s) \times k$ to the dividing unit 65.

The dividing unit 65 divides the difference $(\Delta m - \Delta s) \times k$, which is input from the subtracting unit 64, by k, and outputs the frequency difference $\Delta m - \Delta s$ obtained as a result to an input terminal 66a of the switch 66.

The switch 66 performs switching under the control of the comparing unit 74, and outputs the value that is input to an input terminal 51a or an input terminal 51b to the later stage.

The subtracting unit 67 subtracts the difference $T2_{i-k+1} - T1_{i-k+1}$ corresponding to the Sync message received (k - 1) Sync messages earlier from the difference $T2_i - T1_i$ corresponding to the Sync message received this time, and outputs the difference $(T2_i - T1_i) - (T2_{i-k+1} - T1_{i-k+1}) = \Delta m \times (k - 1) - \Delta s \times (k - 1) = (\Delta m - \Delta s) \times (k - 1)$ to the dividing unit 68.

The dividing unit 68 divides the difference $(\Delta m - \Delta s) \times (k - 1)$, which is input from the subtracting unit 67, by (k - 1), and outputs the frequency difference $\Delta m - \Delta s$ obtained as a result to an input terminal 69a of the switch 69.

The switch 69 performs switching under the control of the comparing unit 73, and outputs the frequency difference $\Delta m - \Delta s$, which is input from the dividing unit 46 to the input terminal 69a, or the value 0, which is input to an input terminal 69b to an input terminal 66b of the switch 66.

The 1-sequence delaying unit 70 stores the difference $T2_i - T1_i$, which is input from the subtracting unit 61, and outputs the difference $T2_{i-1} - T1_{i-1}$ corresponding to the Sync message that has been received last time and been stored, to the subtracting unit 71.

The subtracting unit 71 subtracts the difference $T2_{i-1} - T1_{i-1}$ corresponding to the Sync message received last time from the difference $T2_i - T1_i$ corresponding to the Sync message received this time, and outputs the difference $(T2_i - T1_i) - (T2_{i-1} - T1_{i-1}) = (T1_{i-1} - T1_i) - (T2_{i-1} - T2_i) = \Delta m - \Delta s$ to the determining unit 72.

The determining unit 72 determines the magnitude relationship between the input from the subtracting unit 71 or the frequency difference $\Delta m - \Delta s$ obtained from one communication period and a predetermined threshold value. This predetermined threshold value is 1.5 $\mu$s based on the following assumptions.

Assumptions: The frequency variable range of the VCO of each of the PTP master and the PTP slave is $\pm 300$ ppm, each Sync message transmission interval is 1/64 second, and the largest possible difference between the frequency f2 and the frequency f1 is 100 ppm. Due to the largest frequency difference 100 ppm, an error of 1.5 $\mu$s (= 100 ppm/64) might occur in reception time in one Sync message communication.

The determining unit 72 further notifies the comparators 73 and 74 of an "L", an "S", or an "O" as a determination result. Specifically, when the frequency difference $\Delta m - \Delta s$ is greater than a predetermined threshold value, the comparing units are notified of an L. When the frequency difference $\Delta m - \Delta s$ is smaller than the predetermined threshold value, the comparing units are notified of an S. When the frequency difference $\Delta m - \Delta s = 0$, the comparing units are notified of an O.

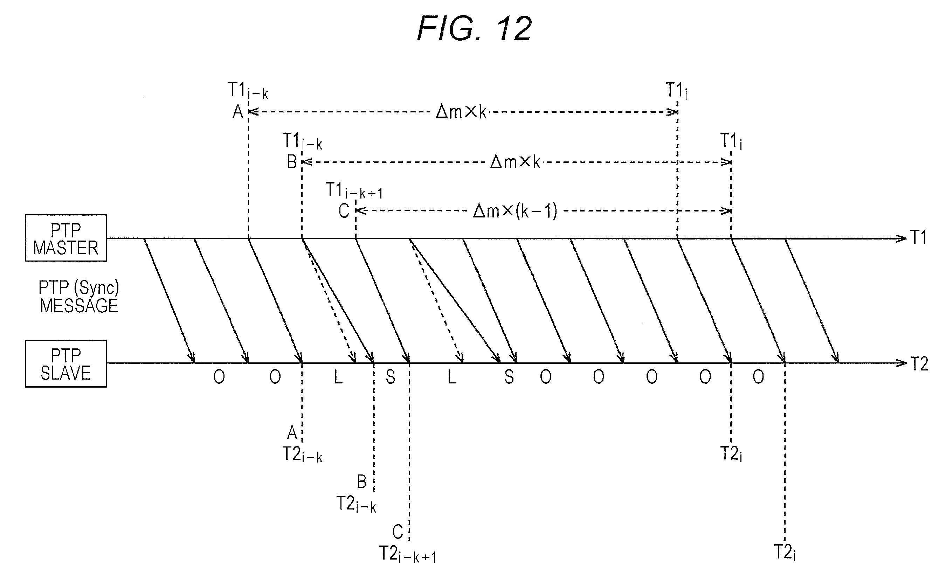

Fig. 12 shows the meanings of an "L", an "S", and an "O" that are sent from the determining unit 72. An "L" indicates that the reception time interval $\Delta s$ between the current Sync message and the first Sync message in the PTP slave is longer than a certain length. An "S" indicates that the reception time interval $\Delta s$ between the current Sync message and the first Sync message in the PTP slave is shorter than the certain length. An "O" indicates that the reception time interval $\Delta s$ between the current Sync message and the first Sync message in the PTP slave is the certain length.

Every time a determination result is input from the determining unit 72, the comparing unit 73 counts and compares the number CL of "L"s and the number CS of "S"s among the k -1 determination results up to this time from the determination result that has been input (k - 1) determination results earlier. When the number CL of "L"s is equal to the number CS of "S"s, "L"s and "S"s offset each other. Therefore, it is determined that no variations in network delay time have occurred during the (k - 1) communication periods, and the switch 69 is made to switch to the input terminal 69a. When the number CL of "L"s differs from the number CS of "S"s, it is determined that a variation in network delay time has occurred during the (k - 1) communication periods, and the switch 69 is made to switch to the input terminal 69b.

Every time a determination result is input from the determining unit 72, the comparing unit 74 counts and compares the number CL of "L"s and the number CS of "S"s among the k determination results up to this time from the determination result that has been input k determination results earlier. When the number CL of "L"s is equal to the number CS of "S"s, "L"s and "S"s offset each other. Therefore, it is determined that no variations in network delay time have occurred during the k communication periods, and the switch 66 is made to switch to the input terminal 66a. When the number CL of "L"s differs from the number CS of "S"s, it is determined that a variation in network delay time has occurred during the k communication periods, and the switch 66 is made to switch to the input terminal 66b.

[Description of Operation]

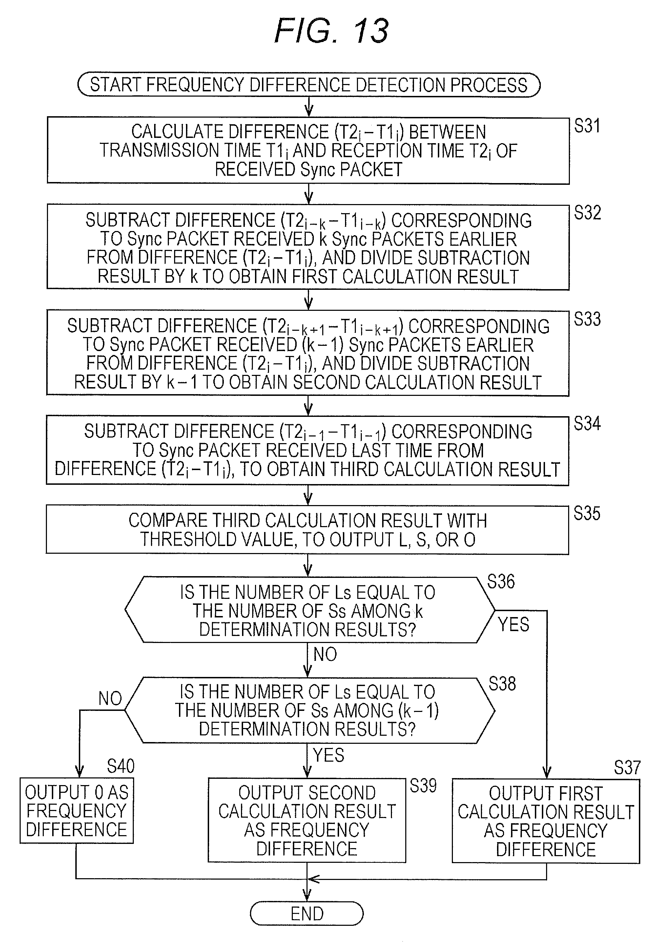

An operation of the frequency difference detection device 60 is now described. Fig. 13 is a flowchart for explaining a frequency difference detection process to be performed by the frequency difference detection device 60.

When the PTP slave including the frequency difference detection device 60 receives a Sync message as a PTP message, the subtracting unit 61 in step S31 subtracts the transmission time $T1_i$ from the reception time $T2_i$, and outputs the difference $T2_i - T1_i$ to the (k - 1)-sequence delaying unit 62, the subtracting unit 64, the subtracting unit 67, the 1-sequence delaying unit 70, and the subtracting unit 71.

In step S32, the subtracting unit 64 subtracts the difference $T2_{i-k} - T1_{i-k}$, which has been input via the (k - 1)-sequence delaying unit 62 and the 1-sequence delaying unit 63 and corresponds to the Sync message received k Sync messages earlier, from the difference $T2_i - T1_i$ corresponding to the Sync message received this time, and outputs the difference $(T2i - T1_i) - (T2_{i-k} - T1_{i-k}) = \Delta m \times k - \Delta s \times k = (\Delta m - \Delta s) \times k$ to the dividing unit 65. The dividing unit 65 divides the difference $(\Delta m - \Delta s) \times k$, which has been input from the subtracting unit 64, by k, and outputs the frequency difference $\Delta m - \Delta s$ as the calculation result (hereinafter referred to as the first calculation result) to the input terminal 66a of the switch 66.

In step S33, the subtracting unit 67 subtracts the difference $T2_{i-k+1} - T1_{i-k+1}$, which has been input via the (k - 1)-sequence delaying unit 62 and corresponds to the Sync message received (k - 1) Sync messages earlier, from the difference $T2_i - T1_i$ corresponding to the Sync message received this time, and outputs the difference $(T2_i - T1_i) - (T2_{i-k+1} - T1_{i-k+1}) = \Delta m \times (k - 1) - \Delta s \times (k - 1) = (\Delta m - \Delta s) \times (k-1)$ to the dividing unit 68.

The dividing unit 68 divides the difference $(\Delta m - \Delta s) \times (k - 1)$, which has been input from the subtracting unit 67, by (k - 1), and outputs the frequency difference $\Delta m - \Delta s$ as the calculation result (hereinafter referred to as the second calculation result) to the input terminal 69a of the switch 69.

In step S34, the subtracting unit 71 subtracts the difference $T2_{i-1} - T1_{i-1}$, which has been input via the 1-sequence delaying unit 70 and corresponds to the Sync message received last time, from the difference $T2_i - T1_i$ corresponding to the Sync message received this time, and outputs the difference $(T2_i - T1_i) - (T2_{i-1} - T1_{i-1}) = (T1_{i-1} - T1_i) - (T2_{i-1} - T2_i) = \Delta m - \Delta s$ (hereinafter referred to as the third calculation result) to the determining unit 72.

In step S35, the determining unit 72 determines the magnitude relationship between the third calculation result that has been input from the subtracting unit 71 and a predetermined threshold value, and notifies the comparators 73 and 74 of an "L", an "S", or an "O" as a determination result.

In step S36, the comparing unit 74 counts the number CL of "L"s and the number CS of "S"s among the k determination results up to this time from the determination result that has been input k determination results earlier, and determines whether the number CL of "L"s is equal to the number CS of "S"s. If the determination result is positive, the process moves on to step S37. In step S37, the comparing unit 74 causes the switch 66 to switch to the input terminal 66a. As a result, the switch 66 outputs the first calculation result, which has been input to the input terminal 66a as the frequency difference $\Delta m - \Delta s$, to the later stage.

If the determination result in step S36 is negative, the process moves on to step S38. In step S38, the comparing unit 74 causes the switch 66 to switch to the input terminal 66b. The comparing unit 73 counts the number CL of "L"s and the number CS of "S"s among the (k - 1) determination results up to this time from the determination result that has been input (k - 1) determination results earlier, and determines whether the number CL of "L"s is equal to the number CS of "S"s. If the determination result is positive, the process moves on to step S39.

In step S39, the comparing unit 73 causes the switch 69 to switch to the input terminal 69a. As a result, the switch 69 outputs the second calculation result, which has been input to the input terminal 69a, to the input terminal 66b of the switch 66. Having already switched to the input terminal 66b, the switch 66 outputs the second calculation result, which has been input to the input terminal 66b, as the frequency difference $\Delta m - \Delta s$ to the later stage.

If the determination result in step S38 is negative, the process moves on to step S40. In step S40, the comparing unit 73 causes the switch 69 to switch to the input terminal 66b. As a result, the switch 69 outputs the value 0, which has been input to the input terminal 69b, to the input terminal 66b of the switch 66. Having already switched to the input terminal 66b, the switch 66 outputs the frequency difference $\Delta m - \Delta s = 0$ to the later stage.

In the PTP slave, the oscillation frequency f2 is adjusted so that the frequency difference $\Delta m - \Delta s$ to be output from the switch 66 will be 0.

As described above, the frequency difference detection device 60 detects a variation in network delay time from the numbers CL and CS of results of determinations performed by the determining unit 72 on the magnitude relationship with respect to the predetermined threshold value 1.5 $\mu$s. Accordingly, a variation in network delay time can be detected with higher precision, and frequency synchronization can be established at a higher speed than with the frequency difference detection device 40.

The frequency difference detection device 60 outputs the frequency difference with respect to the k Sync messages communication period or the (k - 1) Sync messages communication period, like the frequency difference detection device 40. However, frequency differences with respect to communication periods further including stepwise a (k - 2) Sync messages communication period and a (k - 3) Sync messages communication period maybe detected, for example, and a frequency difference not affected by variations in network delay time may be selected from those frequency differences and be output.

[Modification of the Operation of the Frequency Difference Detection Device 60]

The determining unit 72, the comparing unit 73, and the comparing unit 74 may be operated as described below.

In a case where the frequency difference $\Delta m - \Delta s$ obtained by the subtracting unit 71 with respect to one communication period is 0, the determining unit 72 outputs 0 to the later stage. In a case where the frequency difference $\Delta m - \Delta s$ is not 0, the determining unit 72 subtracts a predetermined threshold value (1.5 $\mu$s) from the value of the frequency difference, and outputs the subtraction result to the later stage.

Every time 0 or a subtraction result is input from the determining unit 72, the comparing unit 73 adds up the (k - 1) inputs up to this time from the input that has been made (k - 1) inputs earlier. If the sum is equal to or smaller than the predetermined threshold value (1.5 $\mu$s), it is determined that no variations in network delay time have occurred, and the switch 69 is made to switch to the input terminal 69a. If the sum is greater than the predetermined threshold value (1.5 $\mu$s), on the other hand, it is determined that a variation in network delay time has occurred, and the switch 69 is made to switch to the input terminal 69b.

Every time 0 or a subtraction result is input from the determining unit 72, the comparing unit 74 adds up the k inputs up to this time from the input that has been made k inputs earlier. If the sum is equal to or smaller than the predetermined threshold value (1.5 $\mu$s), it is determined that no variations in network delay time have occurred, and the switch 66 is made to switch to the input terminal 66a. If the sum is greater than the predetermined threshold value (1.5 $\mu$s), on the other hand, it is determined that a variation in network delay time has occurred, and the switch 66 is made to switch to the input terminal 66b.

In the case where such an operation is performed, a variation in network delay time can also be detected with higher precision, and frequency synchronization can also be established at a higher speed than with the frequency difference detection device 40.

The above described series of processes by the frequency difference detection devices 10 through 60 can be performed with hardware or software. Where the series of processes are performed with software, the program that forms the software is installed into a computer. Here, the computer may be a computer incorporated into special-purpose hardware, or may be a general-purpose personal computer that can execute various kinds of functions as various kinds of programs are installed thereinto.

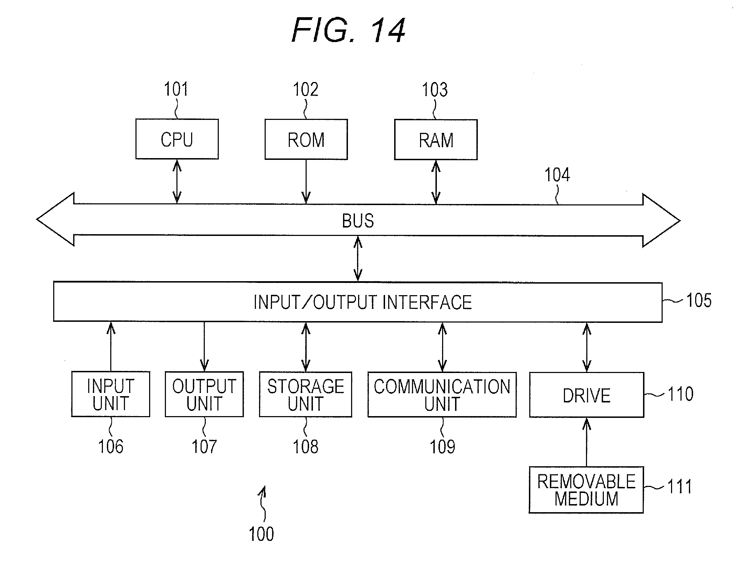

Fig. 14 is a block diagram showing an example structure of the hardware of a computer that performs the above described series of processes in accordance with a program.

In the computer, a CPU (Central Processing Unit) 101, a ROM (Read Only Memory) 102, and a RAM (Random Access Memory) 103 are connected to one another by a bus 104.

An input/output interface 105 is further connected to the bus 104. An input unit 106, an output unit 107, a storage unit 108, a communication unit 109, and a drive 110 are connected to the input/output interface 105.

The input unit 106 is formed with a keyboard, a mouse, a microphone, and the like. The output unit 107 is formed with a display, a speaker, and the like. The storage unit 108 is formed with a hard disk, a nonvolatile memory, or the like. The communication unit 109 is formed with a network interface or the like. The drive 110 drives a removable medium 111 such as a magnetic disk, an optical disk, a magnetooptical disk, or a semiconductor memory.

In the computer having the above described structure, the CPU 101 loads a program stored in the storage unit 108 into the RAM 103 via the input/output interface 105 and the bus 104, and executes the program, so that the above described series of processes are performed.

The program to be executed by the computer (the CPU 101) may be recorded on the removable medium 111 as a package medium to be provided, for example. Alternatively, the program can be provided via a wired or wireless transmission medium such as a local area network, the Internet, or digital satellite broadcasting.

In the computer, the program can be installed into the storage unit 108 via the input/output interface 105 when the removable medium 111 is mounted on the drive 110 . The program can also be received by the communication unit 109 via a wired or wireless transmission medium, and be installed into the storage unit 108. Also, the program may be installed beforehand into the ROM 102 or the storage unit 108.

The program to be executed by the computer may be a program for performing processes in chronological order in accordance with the sequence described in this specification, or may be a program for performing processes in parallel or performing a process when necessary, such as when there is a call.

The embodiments of the present disclosure are not limited to the above described embodiments, and various changes may be made to them without departing from the scope of the present disclosure.

REFERENCE SIGNS LIST

| | |
|---|---|
| 10 | Frequency difference detection device |
| 11 | Subtracting unit |
| 12 | 1-sequence delaying unit |
| 13 | Subtracting unit |
| 14 | 1-sequence delaying unit |
| 15 | Selecting unit |
| 16 | Adding unit |
| 17 | Dividing unit |
| 18 | Median filter |
| 20 | Frequency difference detection device |
| 21 | Subtracting unit |
| 22 | 1-sequence delaying unit |
| 23 | Subtracting unit |
| 24 | Comparing unit |
| 25 | Switch |
| 30 | Frequency difference detection device |
| 31 | Subtracting unit |
| 32 | k-sequence delaying unit |
| 33 | Subtracting unit |
| 34 | Dividing unit |
| 40 | Frequency difference detection device |
| 41 | Subtracting unit |
| 42 | (k - 1)-sequence delaying unit |
| 43 | 1-sequence delaying unit |
| 44 | Subtracting unit |
| 45 | Comparing unit |
| 46 | Dividing unit |
| 47 | Switch |
| 48 | Subtracting unit |
| 49 | Comparing unit |
| 50 | Dividing unit |
| 51 | Switch |
| 60 | Frequency difference detection device |
| 61 | Subtracting unit |
| 62 | (k - 1)-sequence delaying unit |
| 63 | 1-sequence delaying unit |
| 64 | Subtracting unit |
| 65 | Comparing unit |
| 66 | Switch |
| 67 | Subtracting unit |

| 68 | Dividing unit |
|---|---|
| 69 | Switch |
| 70 | 1-sequence delaying unit |
| 71 | Subtracting unit |
| 72 | Determining unit |
| 73, 74 | Comparing unit |

**Claims**

1. A frequency difference detection device that detects a difference in oscillation frequency between a master device and a slave device connected to each other via a network,
the frequency difference detection device comprising:

a first subtracting unit configured to calculate a difference between a transmission time T1 contained in a sync message transmitted periodically from the master device and a reception time T2 at which the message has been received;
a second subtracting unit configured to calculate a difference between a result of a subtraction $T2_i - T1_i$ performed by the first subtracting unit for the sync message received for the ith time, and a result of a subtraction $T2_{i-k} - T1_{i-k}$ performed by the first subtracting unit for the sync message received for the (i - k)th time; and
a first dividing unit configured to divide a result of the subtraction performed by the second subtracting unit by k.

2. The frequency difference detection device according to claim 1, further comprising:

a third subtracting unit configured to calculate a difference between the result of the subtraction $T2_i - T1_i$ performed by the first subtracting unit for the sync message received for the ith time and a result of a subtraction $T2_{i-k+j} - T1_{i-k+j}$ performed by the first subtracting unit for the sync message received for the (i - k + j) th time (j being an integer smaller than k);
a second dividing unit configured to divide a result of the subtraction performed by the third subtracting unit by k - j;
a switch configured to output one of a result of the division performed by the first dividing unit with k and a result of the division performed by the second dividing unit with k - j; and
a switch control unit configured to control the switch.

3. The frequency difference detection device according to claim 2, wherein, in the slave device, the oscillation frequency is adjusted to obtain 0 as one of the result of the division performed by the first dividing unit with k and the result of the division performed by the second dividing unit with k - j , the one of the results being output from the switch.

4. The frequency difference detection device according to claim 2, wherein, under the control of the switch control unit, the switch outputs one of the result of the division performed by the first dividing unit with k, the result of the division performed by the second dividing unit with k - j, and the value 0.

5. The frequency difference detection device according to claim 4, wherein,
when the absolute value of the result of the subtraction performed by the second subtracting unit is equal to or smaller than a predetermined threshold value, the switch control unit causes the switch to output the result of the division performed by the first dividing unit with k,
when the absolute value of the result of the subtraction performed by the second subtracting unit is greater than the predetermined threshold value, and the absolute value of the result of the subtraction performed by the third subtracting unit is equal to or smaller than the predetermined threshold value, the switch control unit causes the switch to output the result of the division performed by the second dividing unit with k - j, and,
when the absolute value of the result of the subtraction performed by the second subtracting unit is greater than the predetermined threshold value, and the absolute value of the result of the subtraction performed by the third subtracting unit is greater than the predetermined threshold value, the switch control unit causes the switch to output the value 0.

6. The frequency detection device according to claim 4, further comprising:

a fourth subtracting unit configured to calculate a difference between the result of the subtraction $T2_i - T1_i$ performed by the first subtracting unit for the sync message received for the ith time and a result of a subtraction

$T2_{i-1}$ - $T1_{i-1}$ performed by the first subtracting unit for the sync message received for the (i - 1)th time; and a determining unit configured to detect an increase, a decrease, or no variations in network delay time based on a result of the subtraction performed by the fourth subtracting unit.

7. The frequency difference detection device according to claim 6, wherein,
when the number of times an increase in the network delay time has been detected is equal to the number of times a decrease in the network delay time has been detected among results of the last k detections performed by the determining unit, the switch control unit causes the switch to output the result of the division performed by the first dividing unit with k,
when the number of times an increase in the network delay time has been detected differs from the number of times a decrease in the network delay time has been detected among the results of the last k detections performed by the determining unit, and the number of times an increase in the network delay time has been detected is equal to the number of times a decrease in the network delay time has been detected among results of the last (k - 1) detections performed by the determining unit, the switch control unit causes the switch to output the result of the division performed by the second dividing unit with k - j, and,
when the number of times an increase in the network delay time has been detected differs from the number of times a decrease in the network delay time has been detected among the results of the last k detections performed by the determining unit, and the number of times an increase in the network delay time has been detected differs from the number of times a decrease in the network delay time has been detected among the results of the last (k - 1) detections performed by the determining unit, the switch control unit causes the switch to output the value 0.

8. A frequency difference detection method implemented in a frequency difference detection device that detects a difference in oscillation frequency between a master device and a slave device connected to each other via a network, the frequency difference detection method comprising:

a first subtracting step of calculating a difference between a transmission time T1 contained in a sync message transmitted periodically from the master device and a reception time T2 at which the message has been received;
a second subtracting step of calculating a difference between a result of a subtraction $T2_i$ - $T1_i$ performed in the first subtracting step for the sync message received for the ith time, and a result of a subtraction $T2_{i-k}$ - $T1_{i-k}$ performed in the first subtracting step for the sync message received for the (i - k)th time; and
a dividing step of dividing a result of the subtraction performed in the second subtracting step by k,
the steps being carried out by the frequency difference detection device.

9. A program to be executed by a computer that detects a difference in oscillation frequency between a master device and a slave device connected to each other via a network,
the program causing the computer to function as:

a first subtracting unit configured to calculate a difference between a transmission time T1 contained in a sync message transmitted periodically from the master device and a reception time T2 at which the message has been received;
a second subtracting unit configured to calculate a difference between a result of a subtraction $T2_i$ - $T1_i$ performed by the first subtracting unit for the sync message received for the ith time, and a result of a subtraction $T2_{i-k}$ - $T1_{i-k}$ performed by the first subtracting unit for the sync message received for the (i - k)th time; and
a dividing unit configured to divide a result of the subtraction performed by the second subtracting unit by k.

## FIG. 1

FREQUENCY DIFFERENCE $= \Delta m - \Delta s = (T1_2 - T1_1) - (T2_2 - T2_1) = (T2_1 - T1_1) - (T2_2 - T1_2)$

TIME DIFFERENCE $= \{(T2_2 - T1_2) - (T1_3 - T2_3)\}/2$

EP 2 765 733 A1

## FIG. 2

*FIG. 3*

EP 2 765 733 A1

## FIG. 4

EP 2 765 733 A1

FIG. 5

EP 2 765 733 A1

FIG. 6

EP 2 765 733 A1

## FIG. 7

```
( START FREQUENCY DIFFERENCE DETECTION PROCESS )
                        │
                        ▼
┌────────────────────────────────────────────────────┐  S1
│  CALCULATE DIFFERENCE (T2ᵢ−T1ᵢ) BETWEEN             │
│  TRANSMISSION TIME T1ᵢ AND RECEPTION TIME T2ᵢ OF    │
│           RECEIVED Sync PACKET                       │
└────────────────────────────────────────────────────┘
                        │
                        ▼
┌────────────────────────────────────────────────────┐  S2
│  SUBTRACT DIFFERENCE (T2ᵢ₋ₖ−T1ᵢ₋ₖ) CORRESPONDING   │
│  TO Sync PACKET RECEIVED k Sync PACKETS EARLIER,    │
│         FROM DIFFERENCE (T2ᵢ−T1ᵢ)                   │
└────────────────────────────────────────────────────┘
                        │
                        ▼
┌────────────────────────────────────────────────────┐  S3
│         DIVIDE SUBTRACTION RESULT BY k              │
└────────────────────────────────────────────────────┘
                        │
                        ▼
                   (  END  )
```

S1: CALCULATE DIFFERENCE $(T2_i - T1_i)$ BETWEEN TRANSMISSION TIME $T1_i$ AND RECEPTION TIME $T2_i$ OF RECEIVED Sync PACKET

S2: SUBTRACT DIFFERENCE $(T2_{i-k} - T1_{i-k})$ CORRESPONDING TO Sync PACKET RECEIVED k Sync PACKETS EARLIER, FROM DIFFERENCE $(T2_i - T1_i)$

S3: DIVIDE SUBTRACTION RESULT BY k

## FIG. 8

|   | OUTPUT OF SUBTRACTING UNIT 33 | OUTPUT OF DIVIDING UNIT 34 |
|---|---|---|
| A | FREQUENCY DIFFERENCE ×k | FREQUENCY DIFFERENCE |
| B | FREQUENCY DIFFERENCE ×k−D1 | FREQUENCY DIFFERENCE −D1／k |

# FIG. 9

EP 2 765 733 A1

# FIG. 10

START FREQUENCY DIFFERENCE DETECTION PROCESS

CALCULATE DIFFERENCE $(T2_i - T1_i)$ BETWEEN TRANSMISSION TIME $T1_i$ AND RECEPTION TIME $T2_i$ OF RECEIVED Sync PACKET — S11

SUBTRACT DIFFERENCE $(T2_{i-k+1} - T1_{i-k+1})$ CORRESPONDING TO Sync PACKET RECEIVED $(k-1)$ Sync PACKETS EARLIER, FROM DIFFERENCE $(T2_i - T1_i)$ — S12

IS SUBTRACTION RESULT GREATER THAN THRESHOLD VALUE? — S13

YES

OUTPUT 0 FROM SWITCH 47 — S14

NO

OUTPUT DIVISION RESULT WITH $k-1$ FROM SWITCH 47 — S15

SUBTRACT DIFFERENCE $(T2_{i-k} - T1_{i-k})$ CORRESPONDING TO Sync PACKET RECEIVED $k$ Sync PACKETS EARLIER, FROM DIFFERENCE $(T2_i - T1_i)$ — S16

IS SUBTRACTION RESULT GREATER THAN THRESHOLD VALUE? — S17

YES

OUTPUT OUTPUT OF SWITCH 47 FROM SWITCH 51 — S18

NO

OUTPUT DIVISION RESULT WITH $k$ FROM SWITCH 51 — S19

END

## FIG. 11

EP 2 765 733 A1

# FIG. 12

EP 2 765 733 A1

# FIG. 13

```
( START FREQUENCY DIFFERENCE DETECTION PROCESS )
```

CALCULATE DIFFERENCE $(T2_i - T1_i)$ BETWEEN TRANSMISSION TIME $T1_i$ AND RECEPTION TIME $T2_i$ OF RECEIVED Sync PACKET — S31

SUBTRACT DIFFERENCE $(T2_{i-k} - T1_{i-k})$ CORRESPONDING TO Sync PACKET RECEIVED k Sync PACKETS EARLIER FROM DIFFERENCE $(T2_i - T1_i)$, AND DIVIDE SUBTRACTION RESULT BY k TO OBTAIN FIRST CALCULATION RESULT — S32

SUBTRACT DIFFERENCE $(T2_{i-k+1} - T1_{i-k+1})$ CORRESPONDING TO Sync PACKET RECEIVED $(k-1)$ Sync PACKETS EARLIER FROM DIFFERENCE $(T2_i - T1_i)$, AND DIVIDE SUBTRACTION RESULT BY $k-1$ TO OBTAIN SECOND CALCULATION RESULT — S33

SUBTRACT DIFFERENCE $(T2_{i-1} - T1_{i-1})$ CORRESPONDING TO Sync PACKET RECEIVED LAST TIME FROM DIFFERENCE $(T2_i - T1_i)$, TO OBTAIN THIRD CALCULATION RESULT — S34

COMPARE THIRD CALCULATION RESULT WITH THRESHOLD VALUE, TO OUTPUT L, S, OR O — S35

IS THE NUMBER OF Ls EQUAL TO THE NUMBER OF Ss AMONG k DETERMINATION RESULTS? — S36 — YES

NO

IS THE NUMBER OF Ls EQUAL TO THE NUMBER OF Ss AMONG $(k-1)$ DETERMINATION RESULTS? — S38 — NO / YES

OUTPUT 0 AS FREQUENCY DIFFERENCE — S40

OUTPUT SECOND CALCULATION RESULT AS FREQUENCY DIFFERENCE — S39

OUTPUT FIRST CALCULATION RESULT AS FREQUENCY DIFFERENCE — S37

( END )

# FIG. 14

EP 2 765 733 A1

## INTERNATIONAL SEARCH REPORT

| International application No. |
| --- |
| PCT/JP2012/074832 |

**A. CLASSIFICATION OF SUBJECT MATTER**
*H04L7/00*(2006.01)i, *G04G3/00*(2006.01)i, *G04G3/02*(2006.01)i

According to International Patent Classification (IPC) or to both national classification and IPC

**B. FIELDS SEARCHED**

Minimum documentation searched (classification system followed by classification symbols)
H04L7/00, G04G3/00, G04G3/02

Documentation searched other than minimum documentation to the extent that such documents are included in the fields searched
Jitsuyo Shinan Koho          1922–1996   Jitsuyo Shinan Toroku Koho    1996–2012
Kokai Jitsuyo Shinan Koho    1971–2012   Toroku Jitsuyo Shinan Koho    1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2004-186877 A  (NTT Docomo Inc.),<br>02 July 2004 (02.07.2004),<br>paragraphs [0015] to [0017]; fig. 1, 5<br>& US 2004/0109474 A1    & EP 1427121 A1<br>& DE 60323040 D          & CN 1505279 A | 1,8,9<br>2-7 |
| A | JP 2005-341203 A  (TOA Corp.),<br>08 December 2005 (08.12.2005),<br>entire text<br>(Family: none) | 1-9 |
| A | JP 2010-101793 A  (Sokkia Topcon Co., Ltd.),<br>06 May 2010 (06.05.2010),<br>entire text<br>(Family: none) | 1-9 |

☐ Further documents are listed in the continuation of Box C.       ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 November, 2012 (27.11.12) | 04 December, 2012 (04.12.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 765 733 A1**

**Patent documents cited in the description**

• JP 2010190635 A